# EUROPEAN PATENT SPECIFICATION

(11) **EP 3 357 631 B1**
(45) Date of publication and mention of the grant of the patent: **30.10.2019**
(21) Application number: 18154269.7
(22) Date of filing: 30.01.2018
(51) Int. Cl.: B23P 15/14, F02C 3/107, F02C 7/36, F16H 1/36

(54) **HEAT PIPE COOLING OF GEARED ARCHITECTURE**
WÄRMEROHRKÜHLUNG EINER GETRIEBEARCHITEKTUR
REFROIDISSEMENT DE TUYAU DE CHALEUR D'UNE ARCHITECTURE À ENGRENAGES

(30) Priority: 01.02.2017 US 201715421593
(43) Date of publication of application: 08.08.2018
(73) Proprietor: United Technologies Corporation, Farmington, CT 06032 (US)
(72) Inventor: HILL, James D., W. Abington Twp, PA 18414 (US); LEVASSEUR, Glenn, Colchester, CT 06415 (US)
(74) Representative: Dehns

(56) References cited:
- EP-A1- 3 081 755
- EP-A2- 1 895 124
- RU-C1- 2 605 143
- US-A1- 2014 165 570
- US-A1- 2014 193 238
- US-A1- 2016 169 591

## Description

### BACKGROUND

This present disclosure relates to a gas turbine engine, and more particularly to fluid delivery to a geared architecture of a gas turbine engine.

Gas turbine engines are known and typically include a fan section delivering air into a bypass duct as propulsion air. Further, the fan section delivers air into a compressor section where it is compressed. The compressed air passes into a combustion section where it is mixed with fuel and ignited. Products of this combustion pass downstream over turbine rotors driving them to rotate.

Gas turbine engines may use a geared architecture to connect portions of the fan section to the turbine section, and some gas turbine engines may utilize geared architecture in other areas. Fluids, such as oil are utilized to the geared architecture, in particular to reduce friction and wear between the components of the geared architecture and to remove thermal energy from the geared architecture, improving operating efficiency. Currently such fluids are used both as a lubricant and a cooling medium.

The geared architecture is integrated with a front frame in such a way that a portion of the thermal energy generated by the geared architecture is transferred into an engine core flowpath through conduction on a wall of the front frame. This thermal energy has a negative impact on the core flow of the engine and thus on engine performance.

US 2014/165570 A1 discloses a thermal management system having an evaporator and a condenser connected by channels.

### BRIEF SUMMARY

Viewed from one aspect the present invention provides a thermal management system according to claim 1.

In one embodiment, a thermal management system for a geared architecture of a gas turbine engine includes an evaporator portion located at the geared architecture and configured to exchange thermal energy with the geared architecture via boiling of a volume of heat transfer fluid flowing therethrough and a condenser portion located at a fan bypass flowpath of the gas turbine engine to reject thermal energy from the volume of heat transfer fluid into the fan bypass flowpath. One or more fluid pathways extend from the evaporator portion to the condenser portion to convey the volume of heat transfer fluid therebetween.

The evaporator portion is configured as a heat spreader heat exchanger and includes an inner plate in thermal contact with the geared architecture and an outer plate secured to the inner plate, the inner plate and the outer plate defining a plurality of fluid flow channels therebetween.

Additionally or alternatively, in this or other embodiments the evaporator portion is positioned radially between the geared architecture and a core flowpath of the gas turbine engine.

Additionally or alternatively, in this or other embodiments the condenser portion is located at a case wall of a fan bypass flowpath of the gas turbine engine.

Additionally or alternatively, in this or other embodiments the one or more fluid pathways extend through one or more core struts of the gas turbine engine.

In another embodiment a geared architecture system of a gas turbine engine includes a geared architecture and a thermal management system including an evaporator portion located at the geared architecture and configured to exchange thermal energy with the geared architecture via boiling of a volume of heat transfer fluid flowing therethrough and a condenser portion located at a fan bypass flowpath of the gas turbine engine heat to reject thermal energy from the volume of heat transfer fluid into the fan bypass flowpath. One or more fluid pathways extend from the evaporator portion to the condenser portion to convey the volume of heat transfer fluid therebetween.

The evaporator portion is configured as a heat spreader heat exchanger and includes an inner plate in thermal contact with the geared architecture and an outer plate secured to the inner plate, the inner plate and the outer plate defining a plurality of fluid flow channels therebetween.

Additionally or alternatively, in this or other embodiments the evaporator portion is located radially between the geared architecture and a core flowpath of the gas turbine engine.

Additionally or alternatively, in this or other embodiments the condenser portion is located at a case wall of a fan bypass flowpath of the gas turbine engine.

Additionally or alternatively, in this or other embodiments the one or more fluid pathways extend through one or more core struts of the gas turbine engine.

Additionally or alternatively, in this or other embodiments the geared architecture is an epicyclic gear system.

Additionally or alternatively, in this or other embodiments the epicyclic gear system includes a sun gear, a ring gear, and a plurality of star gears enmeshed between the sun gear and the ring gear.

In yet another embodiment, a gas turbine engine includes a fan section, a compressor section, a combustor section, a turbine section, and a geared architecture system to couple the fan section to the turbine section. The geared architecture system includes a geared architecture having a sun gear, a ring gear, and a plurality of star gears enmeshed between the sun gear and the ring gear, and a thermal management system including an evaporator portion located at the geared architecture and configured to exchange thermal energy with the geared architecture via boiling of a volume of heat transfer fluid flowing therethrough and a condenser portion located at a fan bypass flowpath of the gas turbine engine heat to reject thermal energy from the volume of heat transfer fluid into the fan bypass flowpath. One or more fluid pathways extend from the evaporator portion to the condenser portion configured to convey the volume of heat transfer fluid therebetween.

The evaporator portion is configured as a heat spreader heat exchanger and includes an inner plate in thermal contact with the geared architecture, and an outer plate secured to the inner plate, the inner plate and the outer plate defining a plurality of fluid flow channels therebetween.

Additionally or alternatively, in this or other embodiments the evaporator portion is located radially between the geared architecture and a core flowpath of the gas turbine engine.

Additionally or alternatively, in this or other embodiments the condenser portion is located at a case wall of a fan bypass flowpath of the gas turbine engine.

Additionally or alternatively, in this or other embodiments the one or more fluid pathways extend through one or more core struts of the gas turbine engine.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 schematically shows an embodiment of a gas turbine engine;
FIG. 2 is a schematic plan view of an embodiment of a geared architecture for a gas turbine engine;
FIG. 3 is a side cross-sectional view of a portion of the gas turbine engine; and
FIG. 4 is a partially exploded view of an embodiment of a portion of a thermal management system.

### DETAILED DESCRIPTION

A detailed description of one or more embodiments of the disclosed apparatus and method are presented herein by way of exemplification and not limitation with reference to the Figures.

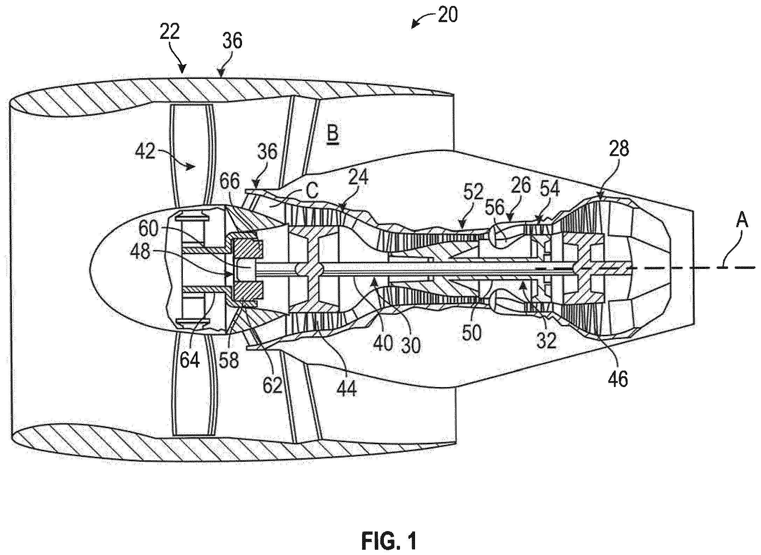

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine architectures might include an augmentor section and exhaust duct section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engines such as a low bypass augmented turbofan, turbojets, turboshafts, and three-spool (plus fan) turbofans wherein an intermediate spool includes an intermediate pressure compressor (IPC) between a low pressure compressor (LPC) and a high pressure compressor (HPC), and an intermediate pressure turbine (IPT) between a high pressure turbine (HPT) and a low pressure turbine (LPT).

The gas turbine engine 20 generally includes a low spool 30 and a high spool 32 mounted for rotation about an engine central longitudinal axis A relative to an engine static structure 36 via several bearing components (not shown). The low spool 30 generally includes an inner shaft 40 that interconnects a fan 42, a low pressure compressor (LPC) 44, and a low pressure turbine (LPT) 46. The inner shaft 40 drives the fan 42 directly or through a geared architecture 48 to drive the fan 42 at a lower speed than the LPC 44. An exemplary geared architecture 48 is a reduction transmission having an epicyclic gear arrangement, namely a planetary gear arrangement or a star gear arrangement.

The high spool 32 includes an outer shaft 50 that interconnects a high pressure compressor (HPC) 52 and a high pressure turbine (HPT) 54. A combustor 56 is located between the HPC 52 and the HPT 54. The inner shaft 40 and the outer shaft 50 are concentric and rotate about the engine central longitudinal axis A, which is collinear with the respective longitudinal axes of the inner shaft 40 and the outer shaft 50.

Core airflow along the core flowpath C is compressed by the LPC 44 and then the HPC 52, mixed with fuel and combusted at the combustor 56, then expanded over the HPT 54 and the LPT 46. The HPT 54 and the LPT 46 rotationally drive the low spool 30 and the high spool 32, respectively, in response to the expansion. The inner shaft 40 and the outer shaft 50 are supported at a plurality of locations by the bearing components. It should be understood that various bearing components at various locations may alternatively or additionally be provided.

In one example, the gas turbine engine 20 is a high bypass geared aircraft engine 20 with a bypass ratio greater than about six (6:1). The geared architecture 48 can include an epicyclic gear train, such as a planetary gear system or other gear system. An example epicyclic gear train has a gear reduction ratio greater than about 2.3:1, and in another example the gear reduction ratio is greater than about 2.5:1. The geared turbofan configuration enables operation of the low spool 30 at higher speeds and rotation of the fan 42 at relatively lower speed, which increases an operational efficiency of the LPC 44 and LPT 46 to provide an increased pressure in a relatively fewer number of stages.

A pressure ratio associated with the LPT 46 is pressure measured prior to the inlet of the LPT prior to an exhaust nozzle of the gas turbine engine 20. In one non-limiting embodiment, the bypass ratio of the gas turbine engine 20 is greater than about ten (10:1), a fan 42 diameter is significantly larger than a diameter of the LPC 44, and the LPT 46 has a pressure ratio that is greater than about five (5:1). It should be understood, however, that the above parameters are only exemplary of one embodiment of a geared architecture gas turbine engine 20 and that the present disclosure is applicable to other gas turbine engines 20 including direct drive turbofans, wherein the rotational speed of the fan 42 is the same (1:1) as the rotational speed of the LPC 44.

In one example, a significant amount of thrust is provided by the bypass flowpath B due to the high bypass ratio. The fan section 22 of the gas turbine engine 20 is designed for a particular flight condition - typically cruise operation at about 0.8 Mach and an altitude of about 35,000 feet. In this flight condition, the gas turbine engine 20 operates at a bucket cruise condition of thrust specific fuel consumption (TSFC), an industry standard parameter of fuel consumption per unit of thrust.

Fan pressure ratio is the pressure ratio across a fan blade of the fan section 22 without the use of a fan exit guide vane system. A fan pressure ratio of an example gas turbine engine 20 is less than about 1.45. Low corrected fan tip speed is an actual fan tip speed divided by an industry standard temperature correction of ("Tᵣₐₘ"/518.7)^{0.5}. The low corrected fan tip speed according to one gas turbine engine 20 is less than about 351m/s.

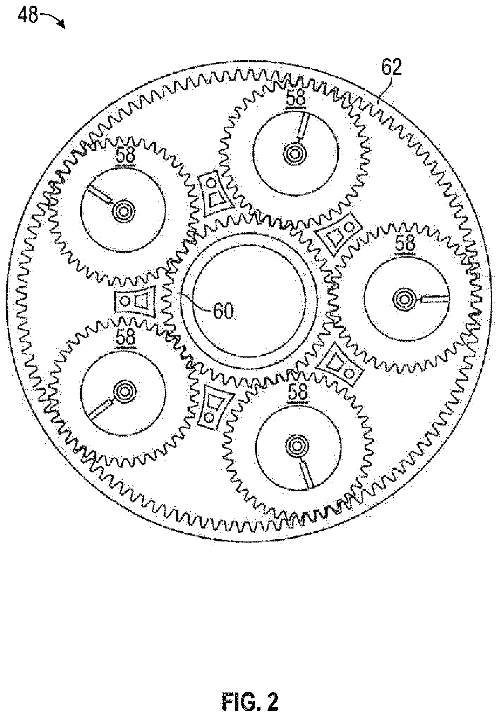

Referring now to FIG. 2, in some embodiments the geared architecture 48 is an epicyclic gear system including a plurality of star gears 58 located radially outboard of a sun gear 60, with a ring gear 62 located radially outboard of the plurality of star gears 58. The plurality of star gears 58 are enmeshed with both the sun gear 60 and the ring gear 62. It is to be appreciated, however, that the use of other types of geared architectures 48 is contemplated within the scope of the present disclosure.

As shown in FIG. 1, the inner shaft 40 is connected to the fan 42, specifically to a fan shaft 64 via the geared architecture 48. In the embodiment shown, sun gear 60 is connected to and rotates with the inner shaft 40. The ring gear 62 is operably connected to the fan shaft 64, which rotates at the same speed as fan 42. The star gears 58 are enmeshed between the sun gear 60 and the ring gear 62 such that the star gears 38 rotate when the sun gear 42 rotates. When the inner shaft 40 rotates, the geared architecture 48 causes the fan shaft 64 to rotate at a slower rotational velocity than that of the inner shaft 40, and in an opposite rotational direction. It is to be appreciated that the described embodiment of the geared architecture 48 is merely exemplary, and that other configurations may be utilized. The geared architecture 48 is stationarily mounted within the gas turbine engine 20 to a non-rotating engine front frame 66, or to other rotationally static engine structure 36 of the gas turbine engine 20.

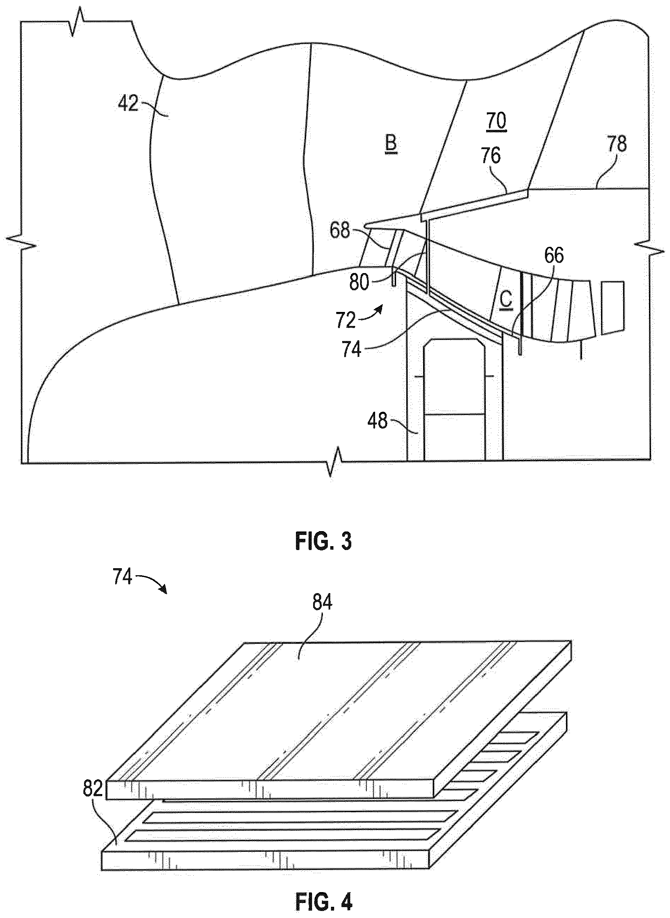

Referring now to FIG. 3, the geared architecture 48 and the front frame 66 are shown in more detail. The front frame 66 includes one or more core struts 68 that extend across the core flowpath C of the gas turbine engine 20, and one or more fan struts 70 that extend across the bypass flowpath B of the gas turbine engine 20. A thermal management system 72 is disposed at the front frame 66 to remove thermal energy from the geared architecture 48 and transfer that thermal energy to the fan bypass flowpath B.

The thermal management system 72 includes an evaporator portion 74 disposed radially between the geared architecture 48 and the core flowpath C, and a condenser portion 76 disposed between the core flowpath C and the fan bypass flowpath B. In some embodiments, the evaporator portion 74 is disposed at the front frame 66, and the condenser portion 76 is disposed at a case wall 78 of the fan bypass flowpath B. Further, one or more fluid pathways 80 connect the evaporator portion 74 to the condenser portion 76 facilitating the flow of a heat exchange fluid between the evaporator portion 74 and the condenser portion 76. In some embodiments, the one or more fluid pathways 80 through a core strut 68. In some embodiments, the heat exchange fluid is water, antifreeze, refrigerant or other fluid. In one disclosed non-limiting embodiment, the heat exchange fluid remains liquid between about -80C and 100C then vaporizes at about 100C. Heat generated by the geared architecture 48 vaporizes the heat exchange fluid for communication through the evaporator portion 74 and to the condenser portion 76 via the fluid pathways 80. The vapor exchanges thermal energy with the airflow through the bypass pathway B at the condenser portion 76 at least partially condensing the heat exchange fluid due at least in part to the relatively cool airflow through the bypass flowpath B. The heat exchange fluid then is returned to the evaporator portion 74 along the fluid pathways 80 and into a heat exchange relationship with the geared architecture 48 as a liquid. The thermal management system 72 operates as an essentially closed-loop heat pipe type system.

The evaporator 74 is a heat spreader type heat exchanger. Referring now to FIG. 4, an exemplary evaporator portion 74 is illustrated. The evaporator portion 74 includes is a thin plate structure, including an inner plate 82 in thermal contact with the geared architecture 48 and an outer plate 84 affixed to the inner plate 82. A plurality of flow channels are defined between the inner plate 82 and the outer plate 84, configured for the flow of heat transfer fluid to flow therethrough. In some embodiments, the inner plate 82 is formed from a material having a high thermal conductivity, such as a copper material. The heat transfer fluid flowing through the plurality of flow channels is boiled by the thermal energy conducted from the geared architecture 48 via the inner plate 82 and the resulting vapor is communicated to the condenser portion 76 via the fluid pathways 80. In some embodiments, the condenser portion 76 may also be configured as a heat spreader type heat exchanger.

The use of the heat spreader at the evaporator portion 74 allows for the removal of a large amount of thermal energy from the geared architecture 48 due to the relatively large surface area of the inner plate 82. Further, the large surface area of the heat spreader-type evaporator portion 74 reduces the amount of thermal energy radiated into the core flowpath C from the geared architecture 48 and from the thermal management system 72 and beneficially rejecting the thermal energy into the bypass flowpath B. The use of the thermal management system 72 further improves oil performance of the geared architecture 48 due to the reduction in need for the oil to provide cooling to the geared architecture 48 in addition to lubrication. Thus, the volume of oil needed for the geared architecture 48 can be reduced.

While the present disclosure has been described in detail in connection with only a limited number of embodiments, it should be readily understood that the present disclosure is not limited to such disclosed embodiments. Additionally, while various embodiments have been described, it is to be understood that aspects of the present disclosure may include only some of the described embodiments. Accordingly, the present disclosure is not to be seen as limited by the foregoing description, but is only limited by the scope of the appended claims.

## Claims

1. A thermal management system (72) for a geared architecture (48) of a gas turbine engine (20), comprising:
an evaporator portion (74) disposed at the geared architecture (48) and configured to exchange thermal energy with the geared architecture (48) via boiling of a volume of heat transfer fluid flowing therethrough;
a condenser portion (76) disposed at a fan bypass flowpath (B) of the gas turbine engine (20) to reject thermal energy from the volume of heat transfer fluid into the fan bypass flowpath (B); and
one or more fluid pathways (80) extending from the evaporator portion (74) to the condenser portion (76) configured to convey the volume of heat transfer fluid therebetween; **characterized in that**:
the evaporator portion (74) is configured as a heat spreader heat exchanger; and
the evaporator portion (74) includes:
an inner plate (82) in thermal contact with the geared architecture (48); and
an outer plate (84) secured to the inner plate (82), the inner plate (82) and the outer plate (84) defining a plurality of fluid flow channels therebetween.

2. The thermal management system (72) of claim 1, wherein the evaporator portion (74) is disposed radially between the geared architecture (48) and a core flowpath (C) of the gas turbine engine (20).

3. The thermal management system (72) of any preceding claim, wherein the condenser portion (76) is disposed at a case wall (78) of a fan bypass flowpath (B) of the gas turbine engine (20).

4. The thermal management system (72) of any preceding claim, wherein the one or more fluid pathways (80) extend through one or more core struts (68) of the gas turbine engine (20).

5. A geared architecture system of a gas turbine engine, comprising:
a geared architecture (48); and
a thermal management system (72) as claimed in any of claims 1 to 4.

6. The geared architecture system of claim 5, wherein the geared architecture (48) is an epicyclic gear system.

7. The geared architecture system of claim 6, wherein the epicyclic gear system includes:
a sun gear (60);
a ring gear (62); and
a plurality of star gears (58) enmeshed between the sun gear (60) and the ring gear (62).

8. A gas turbine engine (20) comprising:
a fan section (22);
a compressor section (24);
a combustor section (26);
a turbine section (28); and
a geared architecture system to couple the fan section (22) to the compressor section (24), including:
a geared architecture (48) having:
a sun gear (60);
a ring gear (62); and
a plurality of star gears (58) enmeshed between the sun gear (60) and the ring gear (62); and
a thermal management system (72) as claimed in any of claims 1 to 4.

## Patentansprüche

1. Wärmemanagementsystem (72) für eine Getriebearchitektur (48) eines Gasturbinentriebwerks (20), umfassend:
einen Verdampferabschnitt (74), der an der Getriebearchitektur (48) angeordnet ist und konfiguriert ist, um Wärmeenergie mit der Getriebearchitektur (48) über das Kochen eines Volumens eines Wärmeübertragungsmediums, das dadurch strömt, auszutauschen;
einen Kondensatorabschnitt (76), der an einem Gebläse-Nebenströmungsweg (B) des Gasturbinentriebwerks (20) angeordnet ist, um Wärmeenergie von dem Volumen des Wärmeübertragungsmediums in den Gebläse-Nebenströmungsweg (B) zurück abzugeben; und
einen oder mehrere Fluidströmungswege (80), die sich von dem Verdampferabschnitt (74) zum Kondensatorabschnitt (76) erstrecken und konfiguriert sind, um das Volumen des Wärmeübertragungsmediums dazwischen zu befördern; **dadurch gekennzeichnet, dass**:
der Verdampferabschnitt (74) als ein Wärmeausbreitungswärmetauscher konfiguriert ist; und
der Verdampferabschnitt (74) Folgendes beinhaltet:
eine Innenplatte (82) in Wärmekontakt mit der Getriebearchitektur (48); und
eine Außenplatte (84), die an der Innenplatte (82) fixiert ist, wobei die Innenplatte (82) und die Außenplatte (84) eine Vielzahl von Fluidströmungskanälen dazwischen definieren.

2. Wärmemanagementsystem (72) nach Anspruch 1, wobei der Verdampferabschnitt (74) radial zwischen der Getriebearchitektur (48) und einem Kernströmungsweg (C) des Gasturbinentriebwerks (20) angeordnet ist.

3. Wärmemanagementsystem (72) nach einem der vorstehenden Ansprüche, wobei der Kondensatorabschnitt (76) an einer Gehäusewand (78) eines Gebläse-Nebenströmungswegs (B) des Gasturbinentriebwerks (20) angeordnet ist.

4. Wärmemanagementsystem (72) nach einem der vorstehenden Ansprüche, wobei sich der eine oder die mehreren Fluidströmungswege (80) durch eine oder mehrere Kernstreben (68) des Gasturbinentriebwerks (20) erstreckt/erstrecken.

5. Getriebearchitektursystem eines Gasturbinentriebwerks, umfassend:
eine Getriebearchitektur (48); und
ein Wärmemanagementsystem (72) nach einem der Ansprüche 1 bis 4.

6. Getriebearchitektursystem nach Anspruch 5, wobei die Getriebearchitektur (48) ein Planetengetriebesystem ist.

7. Getriebearchitektursystem nach Anspruch 6, wobei das Planetengetriebesystem Folgendes beinhaltet:
ein Sonnenrad (60);
ein Hohlrad (62); und
eine Vielzahl von Planetenrädern (58), die mit dem Sonnenrad (60) und dem Hohlrad (62) kämmen.

8. Gasturbinentriebwerk (20), umfassend:
einen Gebläseabschnitt (22);
einen Verdichterabschnitt (24);
einen Brennraumabschnitt (26);
einen Turbinenabschnitt (28); und
ein Getriebearchitektursystem, um den Gebläseabschnitt (22) mit dem Verdichterabschnitt (24) zu koppeln und das Folgendes beinhaltet:
eine Getriebearchitektur (48), die Folgendes aufweist:
ein Sonnenrad (60);
ein Hohlrad (62); und
eine Vielzahl von Planetenrädern (58), die mit dem Sonnenrad (60) und dem Hohlrad (62) kämmen; und
ein Wärmemanagementsystem (72) nach einem der Ansprüche 1 bis 4.

## Revendications

1. Système de gestion thermique (72) pour une architecture à engrenages (48) d'un moteur à turbine à gaz (20), comprenant :
une partie évaporateur (74) disposée sur l'architecture à engrenages (48) et configurée pour échanger de l'énergie thermique avec l'architecture à engrenages (48) via l'ébullition d'un volume de fluide caloporteur s'écoulant à travers celle-ci ;
une partie condenseur (76) disposée sur une voie d'écoulement de dérivation de ventilateur (B) du moteur à turbine à gaz (20) afin de rejeter l'énergie thermique du volume de fluide caloporteur dans la voie d'écoulement de dérivation de ventilateur (B) ; et
un ou plusieurs passages de fluide (80) s'étendant de la partie évaporateur (74) à la partie condenseur (76) configurée pour transporter le volume de fluide caloporteur entre celles-ci ; **caractérisé en ce que** :
la partie évaporateur (74) est configurée en tant qu'échangeur de chaleur à répartiteur de chaleur ; et
la partie évaporateur (74) comprend :
une plaque interne (82) en contact thermique avec l'architecture à engrenages (48) ; et
une plaque externe (84) fixée à la plaque interne (82), la plaque interne (82) et la plaque externe (84) définissant une pluralité de canaux d'écoulement de fluide entre elles.

2. Système de gestion thermique (72) selon la revendication 1, dans lequel la partie évaporateur (74) est disposée radialement entre l'architecture à engrenages (48) et une voie d'écoulement central (C) du moteur à turbine à gaz (20).

3. Système de gestion thermique (72) selon une quelconque revendication précédente, dans lequel une partie condenseur (76) est disposée au niveau d'une paroi de boîtier (78) d'une voie d'écoulement de dérivation de ventilateur (B) du moteur à turbine à gaz (20).

4. Système de gestion thermique (72) selon une quelconque revendication précédente, dans lequel les un ou plusieurs passages de fluide (80) s'étendent à travers une ou plusieurs entretoises centrales (68) du moteur à turbine à gaz (20).

5. Système d'architecture à engrenages d'un moteur à turbine à gaz, comprenant :
une architecture à engrenages (48) ; et
un système de gestion thermique (72) selon l'une quelconque des revendications 1 à 4.

6. Système d'architecture à engrenages selon la revendication 5, dans lequel l'architecture à engrenages (48) est un système d'engrenage épicycloïdal.

7. Système d'architecture à engrenages selon la revendication 6, dans lequel le système d'engrenage épicycloïdal comprend :
un pignon planétaire (60) ;
une roue dentée (62) ; et
une pluralité d'engrenages en étoile (58) en prise entre le pignon planétaire (60) et la roue dentée (62).

8. Moteur à turbine à gaz (20) comprenant :
une section de ventilateur (22) ;
une section de compresseur (24) ;
une section de chambre de combustion (26) ;
une section de turbine (28) ; et
un système d'architecture à engrenages pour coupler la section de ventilateur (22) à la section de compresseur (24), comprenant :
une architecture à engrenages (48) comportant :
un pignon planétaire (60) ;
une roue dentée (62) ; et
une pluralité d'engrenages en étoile (58) en prise entre le pignon planétaire (60) et la roue dentée (62) ; et
un système de gestion thermique (72) selon l'une quelconque des revendications 1 à 4.
